Europäisches Patentamt

European Patent Office

Office européen des brevets

(19)

(11) Veröffentlichungsnummer : **0 026 411**
**B1**

(12) **EUROPÄISCHE PATENTSCHRIFT**

(45) Veröffentlichungstag der Patentschrift :
13.07.83

(51) Int. Cl.³ : **H 04 Q   3/00**

(21) Anmeldenummer : 80105645.8

(22) Anmeldetag : 19.09.80

(54) Schaltungsanordnung zur Feststellung des Schaltzustandes einer Teilnehmeranschlussleitung in Fernsprechvermittlungsanlagen.

(30) Priorität : 26.09.79 DE 2939009

(43) Veröffentlichungstag der Anmeldung :
08.04.81 Patentblatt 81/14

(45) Bekanntmachung des Hinweises auf die Patenterteilung : 13.07.83 Patentblatt 83/28

(84) Benannte Vertragsstaaten :
AT BE CH DE FR GB IT LI LU NL SE

(56) Entgegenhaltungen :
EP A 0 011 720
DE A 1 512 036
DE A 2 009 686
DE A 2 542 615

(73) Patentinhaber : SIEMENS AKTIENGESELLSCHAFT
Berlin und München Wittelsbacherplatz 2
D-8000 München 2 (DE)

(72) Erfinder : Lechner, Robert, Dipl.-Ing.
Haidfeldstrasse 5
D-8156 Otterfing (DE)

# Schaltungsanordnung zur Feststellung des Schaltzustandes einer Teilnehmeranschlußleitung in Fernsprechvermittlungsanlagen.

Die Erfindung betrifft eine Schaltungsanordnung zur Feststellung des Schaltzustandes einer Teilnehmeranschlußleitung in Fernmeldeanlagen, deren Leitungsadern über jeweils einen Speisewiderstand an einen der beiden Pole der Speisespannungsquelle angeschlossen sind, vorzugsweise in durch eine zentrale Steuereinrichtung gesteuerten Fernsprechvermittlungsanlagen, insbesondere Fernsprechnebenstellenanlagen, durch Bewertung des Potentialzustandes an leitungsadernbezogenen festen Ankopplungspunkten in der dem amtsseitigen Abschluß der jeweiligen Teilnehmeranschlußleitung bildenden Teilnehmeranschlußschaltung, wobei bezogen auf die möglichen Schaltzustände der Teilnehmeranschlußleitung abhängig vom Betriebszustand derselben unterschiedliche Indikationen durchführbar sind und wobei diese Indikationen unter Verwendung einer zyklisch weitergeschalteten Auswahlschaltung nacheinander bei einer Vielzahl von Teilnehmeranschlußleitungen durchgeführt werden.

In Fernsprechvermittlungsanlagen wird zum Anschluss jeder Teilnehmerleitung an die Vermittlungsstelle eine Teilnehmeranschlußschaltung benötigt, die eine Reihe von Funktionen erfüllt. Sie dient unter anderem zur Übertragung der Sprachsignale in beiden Richtungen, der Einspeisung des Rufsignals und bildet eine Abschlussimpedanz für die Leitung. Weiterhin enthält sie eine Gabelanordnung zur Umsetzung des Zweidrahtsystems der Teilnehmeranschlußleitung auf das Vierdraht-Steuersystem innerhalb der Vermittlungsstelle. Bei Vermittlungsstellen, die ein elektronisches Koppelfeld enthalten, besitzt jede Teilnehmeranschlußschaltung eine Speiseeinrichtung für die Fernsprechteilnehmerstellen. Enthält diese Speiseeinrichtung Speisewiderstände, über die eine jede Ader der Anschlussleitung mit der speisenden Quelle verbunden ist, so können die daran auftretenden Potentialänderungen bei Änderungen des Belegungszustandes der Leitung für die erforderliche Registrierung dieses Belegungszustandes herangezogen werden. Durch eine mit den Leitungsadern entsprechend gekoppelte Bewertungsanordnung wird also der von einer Teilnehmerstelle ausgehende Wunsch zur Verbindungsherstellung oder die durch eine Erdtastenbetätigung der Teilnehmerstelle signalisierte Forderung zur Einleitung eines Rückfrage- oder Umlegevorganges erkannt. Es muss das mit dem Abheben des Handapparates bewirkte Schliessen des Leitungsstromkreises festgestellt werden, wenn eine Teilnehmerstelle gerufen wird und es müssen die von der rufenden Teilnehmerstelle bewirkten Wählimpulse ausgewertet werden. Bei diesen genannten Auswertungen muss eine genügende Sicherheit gegen ein fehlerhaftes Ansprechen gewährleistet sein. Eine gewisse Erschwerung bereitet dabei auch der Umstand, dass bereits im Ruhezustand der Leitung ein gewisser Ableitstrom fliessen kann. Des weiteren kann eine Störbeeinflussung durch eingekoppelte Wechselspannungsanteile gegeben sein. Die Auswerteschaltung muß so ausgebildet sein, daß eine beeinflussungsunabhängige Feststellung des Schaltzustandes einer Teilnehmeranschlußleitung möglich ist. Dies gilt insbesondere dann, wenn wie in einem bekannten Fall (DE-A-15 12 036) eine Auswahlschaltung vorgesehen ist, die die Auswerteschaltung nacheinander an eine Mehrzahl von Teilnehmeranschlußleitungen anschaltet.

Eine nicht exakt symmetrische Ausbildung der Speiseeinrichtung für die beiden Sprechadern kann sich durch die dabei bedingten Ausgleichsströme im Normalfalle ebenfalls störend auswirken.

Aufgabe der Erfindung ist es, eine Anordnung zur Feststellung des Schaltzustandes einer Teilnehmeranschlußleitung anzugeben, bei der die aufgezeigten Probleme, insbesondere im Hinblick auf die Anwendung von elektronischen Systemteilen in optimaler Weise gelöst werden.

Dies wird bei der Anordnung nach der eingangs genannten Art dadurch erreicht, daß die insgesamt zu bewertenden Indikationsfälle jeweils in zwei sich bei ordnungsgemässem Funktionsablauf einander bedingenden Bewertungsgruppen unterteilt sind und für jede Gruppe die ihr zugeordneten Indikationsfälle durch das Ausgangssignal eines jeder Bewertungsgruppe ausschließlich zugeordneten Komparators registrierbar sind, daß dabei durch jeweils ein Auswahlschaltglied der Auswerteschaltung mindestens einer der Eingänge eines jeden Komparators an die Ankoppelpunkte unter Einschaltung an die unmittelbare Ansteuerung der Auswahlschaltglieder gleichspannungsmäßig ermöglichenden Teilerschaltung anschaltbar sind, daß abhängig vom durch die zentrale Steuereinrichtung einzustellenden Betriebszustand einer jeden Teilnehmeranschlußschaltung (niederohmige bzw. hochohmige Gleichstromspeisung, Rufzustand) für den der vorgeordneten Bewertungsgruppe zugehörigen Komparators jeweils ein seinen Schaltzustand zusätzlich beeinflussender unterschiedlicher Bezugswert vorgebbar ist, daß eingangsseitig für die Komparatoren in jeder Schaltstellung des Auswahlschaltgliedes ein gesonderter, jeweils Siebzwecken dienender kapazitiver Widerstand anschaltbar ist, daß die wirksame Signalisierung der der anderen Bewertungsgruppe zugeordneten Indikationsfälle (Erdtastenbetätigungsindikation) durch das gleichzeitige Auftreten eines Ausgangssignals des der erstgenannten Bewertungsgruppe fest zugeordneten Komparators in Abhängigkeit von einem, dem notwendiger Weise zuzuordnenden Betriebszustand der Teilnehmeranschlußschaltung charakterisierenden Signal, bestimmt ist.

Für eine erste Gruppe von Indikationsfunktionen, denen unterschiedliche Betriebszustände der Teilnehmeranschlußschaltung zugeordnet sein können, werden die Potentialzustände an den beiden adernbezogenen Ankopplungspunkten über die jeweils zuständigen Auswahlschaltglieder unmittelbar einem diese Potentialzustände bewertenden Komparator zugeführt. Je nachdem, welcher Betriebszustand durch ein die Informationen einer jeden Baueinheit über eine entsprechende Schnittstelle aufnehmende Steuereinrichtung eingestellt ist, wird für diesen Komparator ein anderer Schwellwert vorgegeben. Dadurch ist es möglich, in einfacher Weise die Betriebszuverlässigkeit einer Auswertung zu erhöhen, da beispielsweise bei einem wirksamen hochohmigen Speisewiderstand bei einem gegenüber den niederohmigen Speisewiderstand angehobenen Schwellwert dadurch der Komparator infolge geringer Leitungsisolationsfehler nicht anspricht. Es wird über eines der Auswahlschaltglieder derjenige Komparator, der die Indikationsfunktionen der anderen Gruppe bewertet, unsymmetrisch an den Ankopplungspunkt angeschaltet. An den adernbezogenen Ankopplungspunkten können eingekoppelte Längsspannungen auftreten, die sich bei der symmetrischen Anschaltung unter der Voraussetzung, dass der Komparator die Differenz der Spannungen an den Ankopplungspunkten auswertet, gegeneinander aufheben. Durch die wirksame Anschaltung des Siebkondensators wirken sich auch bei der unsymmetrischen Ankopplung derartige Störspannungsanteile nicht aus. Da bezogen auf den der ersten Gruppe zugeordneten Komparator ebenfalls eine Siebung vorgesehen ist, kann beispielsweise die die Speisewiderstände enthaltende Anordnung auch unsymmetrisch aufgebaut sein, ohne dass die beispielsweise den hochohmigen Speisewiderstand betreffende Indikationsfunktion mit einem Fehler behaftet ist.

Durch die gruppenweise Zusammenfassung über die beiden Auswahlschaltglieder ist innerhalb dieser jeweiligen Gruppe lediglich für jede Indikationsfunktion jeweils nur ein, beispielsweise über einen entsprechenden Teiler einstellbarer, Schwellwert aktiviert. Durch den gewählten erfindungsgemässen Gesamtaufbau wird somit der teilnehmerindividuelle Aufwand für einzelne Bauteile und für den Abgleich von Teilerwiderständen verringert. Gegenüber einer denkbaren Lösung, bei der jeder Ankopplungspunkt über einen mit einer entsprechenden Vergleichsspannung beaufschlagten Komparator getrennt nach den einzelnen Indikatorfunktionen auf die diese jeweiligen Funktionen zusammenfassenden Auswerteglieder geschaltet wird, ergibt sich bei der erfindungsgemässen Lösung mit nur zwei nachgeschalteten Komparatoren eine geringere Verlustleistung, wodurch gleichzeitig die Zuverlässigkeit erhöht wird. Für das Erkennen der einzelnen Indikationsfälle werden die dabei jeweils an den Ankopplungspunkten auftretenden Potentialzustände unmittelbar bewertet, wodurch gegenüber Lösungen, in denen diese Zustände jeweils in zusätzlichen Speicherelementen für eine nachfolgende Abtastung abgespeichert werden, eine Aufwandsverringerung eintritt. Durch die erfindungsgemässe Anordnung ist ein raumsparender Aufbau infolge der möglichen Anwendung von im wesentlichen integrierten Funktionseinheiten gegeben.

Gemäss einer Weiterbildung der Erfindung sind mit Bezug auf die erstgenannte Bewertungsgruppe, die also die Schleifenindikation im hochohmigen bzw. im niederohmigen Speisezustand sowie den Rufzustand betrifft, die beiden Eingänge des zugeordneten Komparators an jeweils einen leitungsadernbezogenen Ankopplungspunkt und mit Bezug auf die andere Bewertungsgruppe, die z. B. die Erdtastenbetätigungsindikation betrifft, lediglich ein Eingang des zugeordneten Komparators mit einem der Ankopplungspunkte verbunden. Der andere Eingang dieses Komparators ist mit einem Gleichspannungsbezugswert beaufschlagt.

Für die erste Gruppe findet demnach eine symmetrische Bewertung über den Komparator und für die andere Gruppe eine unsymmetrische Bewertung statt. Längsspannungen, die in beiden Leitungsadern in gleicher Weise durch Einkopplung entstehen, werden im ersten Fall bei der Anwendung eines die Eingangsspannung subtrahierenden Komparators in seinem Gleichtaktbereich ausgeschaltet. Bei der anderen Auswertungsart ist dies, wie bereits erläutert, durch eine entsprechende Siebung erreichbar.

In einer Weiterbildung der Erfindung dienen als leitungsadernbezogene Ankopplungspunkte in der Teilnehmeranschlußschaltung einmal die der Speisespannungsquelle abgewendeten Anschlüsse eines in jeder Ader eingefügten Speisewiderstandes und zum anderen der Verbindungspunkt zweier zwischen diesen Anschlüssen einen hochohmigen Querzweig bildenden Widerstände gleichen Widerstandswertes. Dieser Verbindungspunkt stellt den Ankopplungspunkt für die unsymmetrische Bewertung dar.

Erfindungsgemäss werden die Widerstandswerte dieser den Querzweig bildenden Widerstände so gewählt, dass die in dem genannten hochohmigen Speisezustand der Speiseschaltung dem als anderer Ankopplungspunkt für die symmetrische Auswertung dienenden Anschlusspunkt des Speisewiderstandes eine ebenso grosse Potentialverschiebung bewirken, wie eine geschlossene Teilnehmerleitungsschleife im niederohmigen Speisezustand, wobei jedoch demgegenüber die bei geschlossener Leitungsschleife im hochohmigen Speisezustand der Speiseschaltung eine geringere Potentialveränderung bewirkt wird.

Bei einer derartigen Dimensionierung ist in einfacher Weise eine Prüfung der ordnungsgemässen Funktion der Schleifenindikation möglich.

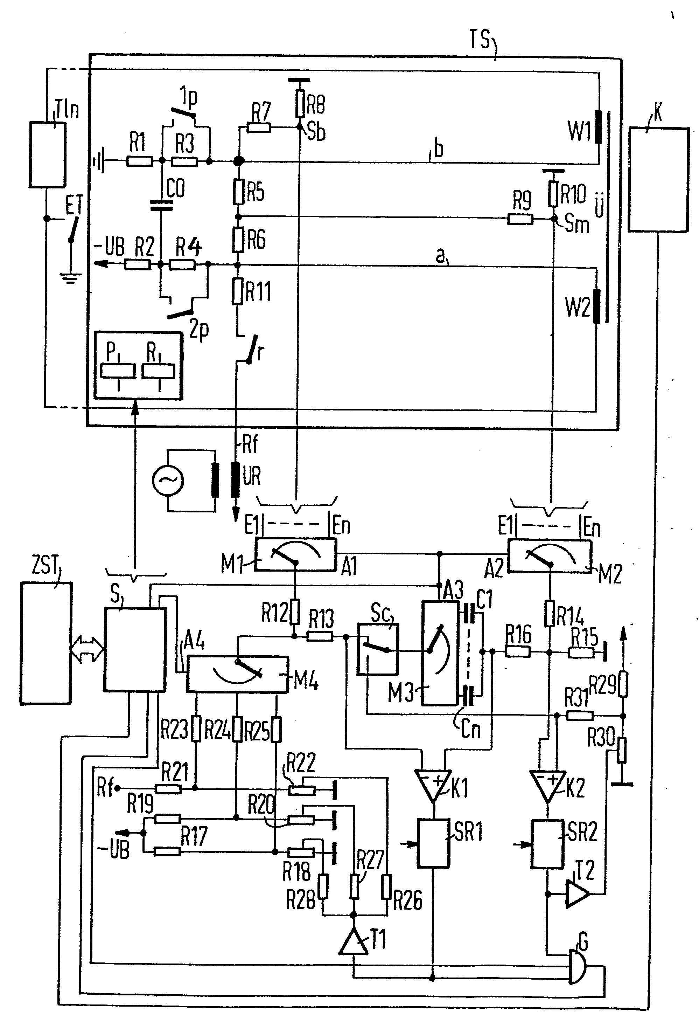

Nachstehend wird die Erfindung anhand eines Ausführungsbeispieles unter Bezugnahme auf die Zeichnung näher erläutert.

Die Figur zeigt lediglich die zum Verständnis der Erfindung notwendigen vermittlungstechnischen Einheiten sowie die für die Bewertung der Potentialzustände an einer Teilnehmeranschlußleitung heranzuziehenden Baueinheiten.

Für Vermittlungsstellen, die ein elektronisches Koppelfeld K enthalten ist als teilnehmerindividuelle Anordnung eine sogenannte Teilnehmerschaltung TS vorgesehen, durch die unter anderem die Speisung der jeweils zugeordneten Teilnehmersprechstelle Tln vorgenommen wird. Bestandteil dieser Teilnehmeranschlußschaltung sind demnach die beiden Speisewiderstände R1 und R2. Der Widerstand R1 ist in die an Erdpotential liegende Ader, die b-Ader der Teilnehmeranschlußleitung und der Widerstand R2 in die an Speisepotential liegende Ader, die a-Ader der Teilnehmeranschlußleitung eingefügt. Das Speisepotential wird über die jeweiligen Teilnehmeranschlußschaltungen für alle Teilnehmersprechstellen einer Vermittlungsstelle von der zentralen Batterie-UB geliefert. Durch den Kondensator CO werden die beiden Leitungsadern an den der speisenden Quelle abgewandten Anschlüssen der beiden Widerstände überbrückt. In jede der beiden Adern ist jeweils ein weiterer Widerstand R3 bzw. R4 eingeschaltet, der über einen Kontakt 1p bzw. 2p unwirksam geschaltet werden kann. Dadurch kann in bestimmten Betriebszuständen entweder ein hochohmiger oder ein niederohmiger Gesamtwiderstand in die Leitungsadern eingeschaltet werden. So ist es denkbar, im Ruhezustand den hochohmigen Widerstandswert zu wählen und erst zu dem Zeitpunkt, zu dem eine niederohmige Speisung erforderlich ist, die Kontakte zu betätigen. Dies kann beispielsweise dann erfolgen, wenn für eine Teilnehmerstelle das Abheben des Handapparates erkannt wurde. Ausgehend von einer niederohmigen Speisung in Gesprächszustand kann immer dann eine hochohmige Schaltung vorgenommen werden, wenn beispielsweise festgestellt wird, daß eine Erdtastenbetätigung eine bestimmte Zeitspanne überschreitet. Dadurch kann sichergestellt werden, daß im Speisestromkreis liegende Schaltkreiselemente nicht überlastet werden.

Die zur Teilnehmerstelle Tln führende Teilnehmeranschlußleitung ist über die in die jeweilige Ader eingefügten Wicklungen w1 bzw. w2 eines Gabelübertragers Ü mit der Speiseanordnung verbunden. Diejenigen Wicklungen, die die 4-Drahtseite des Übertragers bilden, der unter anderem die Gleichstromwege der rufenden und gerufenen Teilnehmerstelle entkoppeln sind nicht dargestellt. Über ein von einer zentralen Steuereinrichtung ZST einstellbares elektronisches Koppelfeld K wird dann ein Teilnehmer beispielsweise an die für den weiteren Aufbau einer abgehenden Verbindung maßgebenden zentralen Einrichtungen, die je nach Art der Gruppierung der Vermittlungsanlage Register oder Verbindungssätze sein können, angeschaltet. Entsprechendes gilt dann für die unter Einbeziehung des Koppelfeldes vorzunehmende Durchschaltung einer ankommenden Verbindung. In diesem Fall wird zuvor über die Teilnehmeranschlußschaltung die Einspeisung eines Rufsignales vorgenommen. Vermittels des Übertragers Ur wird ein zentraler Rufgenerator, der eine Wechselspannung mit der Ruftonfrequenz liefert, bei geschlossenem Kontakt r an die Teilnehmeranschlußleitung angekoppelt. Die Sekundärwicklung dieses Übertragers liegt einerseits am Potential-UB der speisenden Gleichspannungsquelle und andererseits mittels des Anschaltekontaktes r über den Widerstand R11 an der a-Ader. Ab dem Zeitpunkt der Einspeisung des Rufsignales, das also aus der von einer Wechselspannung überlagerten Gleichspannung besteht, sollen die Kontakte 1p bzw. 2p geöffnet sein. Dadurch wird der fließende Rufstrom weder durch den über die Speisewiderstände gelieferten Speisestrom wesentlich beeinträchtigt noch kann er über den Kondensator CO abfließen, da die Widerstände R3 und R4 voraussetzungsgemäß hochohmig sein sollen.

Zur Steuerung der Kontakte r und 1p bzw. 2p ist eine entsprechende Relaissteuerung für die Relais P und R, denen die erwähnten beiden Kontakte gehören, vorhanden. Diejenigen Signale, durch die über eine entsprechende nicht dargestellt Verknüpfung die jeder Teilnehmerschaltung TS zugehörigen Relais P und R gesteuert werden, liefert eine Einheit S, die ihrerseits Informationen von der zentralen Steuereinrichtung ZST erhält. Diese Einheit S bildet für eine Gruppe von Teilnehmerschaltungen die Schnittstelle zur zentralen Steuereinrichtung.

Bei offener Teilnehmerschleife stellen sich an den Adern der Teilnehmeranschlußleitung Potentiale ein, die durch die Größe der Versorgungsspannung-UB und durch die Ableitwiderstände der Teilnehmeranschlußleitung bestimmt sind. Infolge dieser Ableitungen fließt bereits im Ruhezustand der Leitung ein gewisser Ableitstrom. Wird die Teilnehmerschleife geschlossen, so sinkt die Spannungsdifferenz zwischen den Leitungsadern a-b auf einen geringen, vom Schleifenwiderstand abhängigen Wert, während sich das Potential beider Adern auf etwa die halbe Versorgungsspannung einstellt. Es ist nun für Überwachungszwecke und zur Einleitung bestimmter Steuerungsmaßnahmen erforderlich, die einzelnen Betriebszustände einer Teilnehmeranschlußleitung zu erkennen. Da den einzelnen Betriebszuständen unterschiedliche Potentialzustände an den Adern a und b der Teilnehmeranschlußleitung zuzuordnen sind, kann hierzu eine Bewertung dieser jeweiligen Potentialzustände vorgenommen werden. Über eine entsprechende Auswerteschaltung kann dann jeweils das Abheben des Handapparates bei einer Teilnehmerstelle, d. h. also der Schleifenschluß, die Betätigung der Erdtaste an einer Teilnehmerstelle sowie der Schleifenschluß im Rufzustand, der dann die Rufabschaltung zufolge hat, erkannt werden. Weiterhin ist die durch den Teilnehmer vorgenommene Wählzeichengabe zu bewerten.

Die Bewertung der einzelnen Betriebszustände sollte beeinflußungsunabhängig erfolgen. Es sind deshalb Maßnahmen erforderlich, die sicherstellen, daß vorhandene Störanteile eine Auswertung nicht verfälschen.

Als Bezugspunkt für die Bewertung der Potentialzustände dient einmal der Verbindungspunkt zweier Widerstände R5 und R6, die einen hochohmigen Querzweig zwischen den Leitungsadern bilden und zum anderen derjenige Anschlußpunkt des in der b-Ader liegenden Speisewiderstandes, der nicht unmittelbar mit dem einem Pol (Erdpotential der Speisespannungsquelle) verbunden ist. An dem Verbindungspunkt der Querwiderstände R5 und R6, für die ein solch großer Widerstandswert gewählt werden kann daß eine störende Beeinflußung der Gesamtschaltung vermieden wird, entsteht eine Gleichspannung, die wertemäßig der halben Spannung der Speisespannungsquelle-UB entspricht. Bei einer beispielsweise durch eine Starkstromleitung hervorgerufenen Einkoppelung von Störanteilen stimmen diese an den genannten Bezugspunkten hinsichtlich des Betrages, der Phase und der Frequenz überein. Die an diesen Bezugspunkten auftretenden Potentialzustände werden jeweils für eine Gruppe von Teilnehmeranschaltungen durch einen Selektor M1 bzw. M2 abgefragt. Als Ankoppelungspunkte dienen nun nicht unmittelbar die genannten leitungsbezogenen Schaltungspunkte, sondern jeweils der Teilerpunkt einer Spannungsteilerschaltung, die ausgehend von dem genannten Schaltungspunkt gegen Erdpotential geschaltet ist. Es sind dies die aus den Widerständen R7 und R8 bzw. R9 und R10 bestehenden Teilerschaltungen, durch die an den Bezugspunkten auftretenden Spannungswerte auf einen durch integrierte Baueinheiten auswertbaren Spannungswert gebracht werden.

Die Selektoren M1 und M2 können handelsübliche integrierte Einheiten — sogenannte Multiplexer — sein, durch die beispielsweise eine Gruppe von 16 Teilnehmerschaltungen über die entsprechende Anzahl von Eingängen abgefragt werden kann. Hierzu sind die einzelnen Eingänge eines jeden Selektors jeweils mit einem der genannten Teilerpunkte, also beispielsweise bezogen auf die Teilnehmeranschlußschaltung TS mit dem Teilerpunkt Sb für den Selektor M1 und mit dem Teilerpunkt Sm für den Selektor M2, verbunden. Die übrigen Eingänge eines jeden Selektors sind dann in gleicher Weise mit den betreffenden Ankoppelungspunkten der anderen zu dieser Gruppe gehörenden Teilnehmeranschlußschaltungen verbunden. Die an der jeweiligen Eingangsleitung anliegende Information wird dann auf den Ausgang und somit über eine nachgeschaltete Teilerschaltung, die für den Selektor M1 unter anderem den Widerstand R12 und für den Selektor M2 die Widerstände R14 und R15 enthält, über die Widerstände R13 und R16 jeweils auf einen der Eingänge eines Differenzverstärkers K1 geschaltet. Dieser Differenzverstärker ist vorzugsweise ein integrierter Operationsverstärker. Gleichzeitig wird der an den Ankoppelungspunkt Sm einer jeder Teilnehmeranschlußleitung auftretende Potentialzustand über den Selektor M2 einem weiteren, in gleicher Weise aufgebauten Differenzverstärker K2 zugeführt, dessen anderen Eingang über den Widerstand R31 eine von der aus den Widerständen R29 und R30 bestehenden Teilerschaltung abgeleitete Spannung zugeführt wird. Das Ausgangspotential eines jeden Differenzverstärkers K1 bzw. K2, das entweder dem Logikpotential O oder dem Logikpotential L entspricht, wird verzögert um die Durchlaufzeit durch ein jeweils nachgeschaltetes Schieberegister SR1 bzw. SR2 über die die Schnittstelle bildende Einheit S der zentralen Steuereinrichtung ZST mitgeteilt.

Die Übermittlung des Ausgangssignales des Schieberegisters SR2 erfolgt über das Koinzidenzglied G immer erst dann, wenn die Koinzidenzbedingung für die Eingänge vorliegt. Das bedeutet, daß ein Ausgangssignal, das dem Logikpotential L entspricht, immer dann wirksam durch das Koinzidenzglied G weitergeleitet wird, wenn an den beiden Eingängen eine gleichartige Eingangsinformation anliegt. Der eine der beiden weiteren Eingänge ist mit dem Ausgang des Schieberegisters SR1 verbunden, während der andere Eingang von der zentralen Steuereinrichtung über die Einheit S immer dann eine dem Logikpotential L entsprechende Information erhält, wenn die Speiseschaltung niederohmig geschaltet ist. Wie bereits erläutert ist dies immer dann der Fall, wenn aufgrund des entsprechend angesteuerten Relais P die Kontakte 1p und 2p geschlossen sind. Die Ausgangsinformationen eines jeden Schieberegisters beeinflussen über einen Trennverstärker T1 bzw. T2 jeweils eine hinsichtlich ihrer Funktionen noch zu erläuternde Teilerschaltung, die ihrerseits durch Spannungsüberlagerung die dem Eingang des Differenzverstärkers zugeführte Eingangsspannung beeinflußt.

Die Schaltungspunkte Sb und Sm einer jeden Teilnehmeranschlußschaltung sind also für jede Gruppe von insgesamt n Teilnehmerschaltungen jeweils mit einem der Eingänge E1 bis En des Selektors M1 und mit einem der Eingänge E1 bis En des Selektors M2 verbunden. Diese an den jeweiligen Eingängen anliegenden Informationen können zum Ausgang durchgeschaltet werden, so daß sie auf den Komparator K1 bzw. K2 einwirken. Die jeweilige Durchschaltung wird gesteuert durch eine an den Adresseneingängen A1 bzw. A2 anliegende Informationen. Der gewünschte Eingang wird ausgewählt, in dem beispielsweise die entsprechende binär-codierte Adresse an die jeweiligen Adresseneingänge ausgelegt wird. Dies kann sowohl in beliebiger Reihenfolge als auch in der Weise geschehen, daß diese einzelnen Eingänge unmittelbar aufeinanderfolgend durch eine entsprechende fortlaufende Adressierung ausgewählt werden. Angereizt durch die zentrale Steuereinrichtung ZST erfolgt diese Adressierung für die jeweils abzufragende Gruppe von Teilnehmeranschlußleitungen über die dieser Gruppe zugeordnete Schnittstelle S. Mit der Abfrage der nten-Teilnehmerschaltung durch Auswahl des Einganges En des jeweiligen Selektors schließt sich in gleicher Weise die Abfrage der jeweils anderen Gruppen in der durch die zentrale Steuereinrichtung festgelegten Reihenfolge an, so daß jeweils nach Ablauf der vorgesehenen Zykluszeit die erneute Abfrage ein und derselben Gruppe von Teilnehmeranschlußschaltungen bzw. ein und derselben Teilnehmeranschlußschaltung erfolgt. Die Häufigkeit der Abfragevorgänge für jeweils eine Gruppe ist dabei so gewählt, daß die kürzest mögliche Änderung im Schaltzustand einer Teilnehmeranschlußleitung mit der geforderten Sicherheit festgestellt werden kann.

Die Unterscheidung des Ruhezustandes und des Arbeitszustandes, die über den als Indikator dienenden Differenzverstärker K1 vorgenommen wird, ist insofern erschwert, als infolge von Ableitungen bereits im Ruhezustand der Leitung ein gewisser Ableitstrom fließen kann. Der diesen Zustand registrierende Indikator muß dabei so ausgebildet sein, daß auch bei der Überlagerung des Störstromes und eines Ableitstromes kein Arbeitszustand der Leitung registriert wird. Außerdem muß sichergestellt sein, daß im Arbeitszustand bei einer Reduzierung des Mindestarbeitsstromes durch einen Störstrom noch nicht der Ruhezustand der Teilnehmeranschlußleitung festgestellt wird. Aufgrund der unterschiedlichen Leitungslängen der angeschlossenen Teilnehmeranschlußleitungen und der unterschiedlichen Ableitungen gibt es einen bestimmten, dem Arbeitszustand zuzuordnenden Bereich. Eine Teilnehmeranschlußleitung mit dem größtmöglichen vorkommenden Leitungswiderstand muß bezüglich des Arbeitszustandes oder des Ruhezustandes durch den Indikator noch sicher feststellbar sein. Es wird ein Schwellwert für diesen Indikator festgelegt, der die dem Ruhezustand und die dem Arbeitszustand zuzuordnenden Bereiche trennt. Bei der Festlegung des Schwellwertes ist zu beachten, daß der größte noch zulässige Leckwiderstand zu keiner, dem Arbeitszustand entsprechenden, Registrierung führt.

Abhängig von dem durch Schaltmaßnahmen in der Teilnehmeranschlußleitung vorgegebenen Betriebszustand sind nun für denjenigen Indikator, der bei all diesen Betriebszuständen wirksam werden soll, unterschiedliche Schwellwerte vorgegeben. Diese Schwellwerte werden für den hierbei maßgebenden Indikator K1 für die drei möglichen derartigen Betriebszustände, nämlich für den niederohmigen und dem hochohmigen Zustand der Speiseschaltung und dem über den Kontakt r jeweils wirksamgeschalteten Rufzustand, durch Teilerschaltungen vorgegeben. Diese sind jeweils aus den Widerständen R17 und R18, aus den Widerständen R19 und R20 bzw. aus den Widerständen R21 und R22 gebildet. Die beiden erstgenannten Teiler sind zwischen den negativem Pol-UB der Versorgungsspannungsquelle und Erdpotential geschaltet, während der zuletztgenannte Teiler als negative Bezugsspannung die von der Rufspannung überlagerte Versorgungsspannung erhält. Eine derartige Spannung ist beispielsweise an der Sekundärwicklung des allen Teilnehmeranschlußschaltungen gemeinsamen Übertragers UR abnehmbar.

Die sich am Teilerpunkt eines jeden Teilers einstellende Spannung kann dann über einen der Widerstände R23 bis R25 derjenigen Spannung, die über den Widerstand R13 an dem einen Eingang des als Komparator geschalteten Differenzverstärkers K1 anliegt, überlagert werden. Diese ursprüngliche Eingangsspannung wird über den Selektor M1 vom Schaltungspunkt Sb der jeweils wirksam angeschalteten Teilnehmeranschlußschaltung abgenommen. Am anderen Eingang liegt die über den Selektor M2 vom Schaltungspunkt Sm abgegriffene Spannung, die durch den am Selektorausgang angeschalteten und aus den Widerständen R14 und R15 bestehenden Teiler ebenfalls auf einen, durch den Komperatoreingang zu verarbeitenden, Spannungswert gebracht wird. Durch die genannte Überlagerung der vom Schaltungspunkt Sb abgegriffenen Spannung und der sich am jeweiligen Teilerpunkt der genannten, durch die Widerstände R17 bis R22 gebildeten, Teilerschaltungen sich einstellenden Spannungswerte werden unterschiedliche Schwellwerte festgelegt. Für die Dimensionierung der Spannungsteiler sollen beispielsweise folgende Aquivalenzen gelten : R8 = R10Q R7 = (R5//R6) + R9 ; R12 = R14 ; R15 = R23 + (R21//R22) = R24 + (R19//R20) = R25 + (R17//R18).

Die Auswahl, welcher von den dadurch bestimmbaren Schwellwerten maßgebend ist, wird durch den Selektor M4 vorgenommen. Dieser Selektor der auch durch entsprechend steuerbare elektronische Schalter ersetzbar ist, wird in Abhängigkeit vom bestehenden und in der zentralen Steuereinrichtung abgespeicherten Betriebszustand der Teilnehmeranschlußschaltung durch eine entsprechende Adressierung unter Einbeziehung der Schnittstelle S eingestellt. Dadurch wird die Spannung am Teilerpunkt der jeweils diesen vorhandenen Betriebszustand zugeordneten Teilerschaltung der ursprünglichen am Differenzverstärker K1 anliegenden Eingangsspannung überlagert. Die am nicht invertierenden Eingang des Differenzverstärkers K1 anliegende Spannung entspricht der durch die Teilerschaltungen entsprechend herabgesetzten Spannung am Verbindungspunkt der beiden den Querzweig bildenden Widerstände R5 und R6. Diese Spannung ist wertemäßig proportional der halben Versorgungsspannung-UB. Die am Schaltungspunkt Sb über den entsprechenden Teiler abgegriffene Spannung an der b-Ader gibt Aufschluß über den Leitungszustand, da sich bei offener Leitungsschleife und bei geschlossener Leitungsschleife unterschiedliche Potentiale ausbilden. Diese sind dann noch beispielsweise davon abhängig, ob die unter anderem aus den Widerständen R1 bis R4 gebildete Speiseschaltung hochohmig oder niederohmig geschaltet ist. In ersterem Falle sind, wie bereits erläutert, die Kontakte 1p und 2p geöffnet. Das Potential an der b-Ader und somit am Schaltungspunkt Sb wird durch den mit dem Abheben des Handapparates einer Teilnehmerstelle bedingten Schleifenschluß aufgrund des kleinen Gleichstromwiderstandes des Teilnehmerapparates negativ. Es wird dabei der vorgegebene Schwellwert, der z. B. einem fiktiven Widerstand zwischen den beiden Leitungsadern von 10 Kilo-Ohm entsprechen kann, erreicht. Es sind jedoch für die unterschiedlichen Betriebszustände unterschiedliche Schwellwerte vorgesehen. Dadurch, daß beispielsweise im hochohmigen Speisezustand dieser Schwellwert gegenüber dem niederohmigen Speisezustand auf ein höheres Niveau gelegt wird, kann man ausschließen, daß infolge geringer Isolationsfehler der Indikator fälschlicherweise einen Schleifenschluß anzeigt. Die Widerstände der Teilerschaltungen, von denen jeweils die zu überlagernde Spannung gewonnen wird, sind so gewählt, daß die Spannungsdifferenz an den Eingängen des Differenzverstärkers K1 mit Erreichen des dem festgelegten Schwellwert entsprechenden fiktiven Widerstandsschwellwertes zwischen den Adern der Teilnehmeranschlußleitung den Wert Null hat. Dieser Wert stellt sich dann jeweils sowohl beim Übergang von geschlossenen Zustand in den offenen Leitungszustand als auch bei einem in umgekehrter Richtung erfolgenden Übergang ein. Der Widerstandswert für den sich, bezogen auf die Spannungsdifferenz zwischen den Eingängen von K1 dor Wert Null ergibt, ist unabhängig von Änderungen der Versorgungsspannung-UB und von der Rufspannung. Dies wird dadurch erzielt, daß die betreffenden Teilerschaltungen, durch die der für den jeweiligen abgefragten Teilnehmer benötigte Schwellwert über den Selektor M4 angeschaltet wird, von der Versorgungsspannung-UB bzw. von der, sich aus der Überlagerung der Rufspannung und dieser Versorgungsspannung ergebenden Spannung gespeist wird. Letztere kann beispielsweise an dem nicht mit dem negativen Pol der Versorgungsspannung unmittelbar verbundenen Anschluß der Sekundärwicklung des Übertragers UR abgenommen werden. Die Eingangsspannungen für den als Komperator geschalteten Differenzverstärker K1 mitbestimmenden Schaltelemente sind derart dimensioniert, daß bei einem dem Schwellwert entsprechenden Leitungswiderstand die Differenz der Eingangsspannungen zu Null wird. Dies führt dann zu einer Änderung im Ausgangssignal des Differenzverstärkers K1. Hat dieses Ausgangssignal bei einer offenen Leitungsschleife beispielsweise einen dem Logikpotential 0 entsprechenden Wert, so soll sich bei geschlossener Leitungsschleife ein dem Logikpotential 1 zuzuordnender Ausgangswert ergeben. Dieser Ausgangswert würde also bei jeder Abfrage ein- und desselben Teilnehmers solange ausgangsseitig abnehmbar sein, so lange der Schleifenschluß besteht.

Von den einzelnen Betriebszuständen einer jeden Teilnehmeranschlußschaltung, denen also jeweils ein unterschiedlicher Ansprechschwellwert für den Differenzverstärker K1 zugeordnet ist, wird im folgenden die für den vorhandenen Rufzustand festgelegte Schwellwertbestimmung erläutert. Am Schaltungspunkt Sb der im Rufzustand abgefragten Teilnehmeranschlußschaltung ist die Amplitude der daran auftretenden Wechselspannung geringer als am Schaltungspunkt Sm dieser Teilnehmeranschlußschaltung. Da die Spannungswerte beider Abfragepunkte über die entsprechenden Teilerschaltungen den beiden Eingängen des Differenzverstärkers K1 zugeführt werden, muß also für den Schwellwertfall, bei dem definitionsgemäß die Differenz dieser Eingangsspannungen zu Null werden soll, dieser Unterschied im Wechselspannungsanteil ausgeglichen werden. Zu diesem Zweck wird dann über den Widerstand R23 und den entsprechend von der Steuerung her eingestellten Selektor M4 ein entsprechend abgestimmter Rufwechselspannungsanteil dem vom Schaltungspunkt Sb abgegriffenen Wert überlagert. Damit kann ein Teil bei der Abfrage im Rufzustand vorhandenen Wechselspannung im Gleichtaktbereich des Differenzverstärkers K1 elemeniert werden.

Die genannten Schwellen für die einzelnen Betriebszustände einer Teilnehmeranschlußschaltung sind nun nicht auf einen festvorgegebenen Wert beschränkt, sondern es wird hierfür ein dynamischer Änderungsbereich vorgesehen. Dadurch wird erreicht, daß Beeinflussungsgrößen, die im zugelassenen Rahmen eine geringfügige Änderungen des zugeordneten Schwellwiderstandes der Teilnehmeranschlußleitung verursachen, das Abfrageergebnis nicht verfälschen. Zu diesem Zweck wird, unter Mitwirkung des die Ausgangsinformation des Differenzverstärkers K1 aufnehmenden Schieberegisters SR1, eine Verschiebung des über die genannten Teilerschaltungen vorgegebenen jeweiligen Schwellwertes vorgenommen. Dadurch wird eine eindeutige Aussage erreicht. Ableitströme die in der jeweils überprüften Teilnehmeranschlußleitung durch einen Leckwiderstand auftreten, der in etwa dem fiktiven, einer bestimmten Schwellspannung zuzuordnenden Schwellwiderstand entspricht, können sich dann beispielsweise nicht in der Weise auswirken, daß bei der zyklisch vorgenommenen Indikation oszillierende Aussagen hervorgerufen werden.

Das Schieberegister wird, gesteuert durch Informationen die es vom dezentralen Steuerwerk erhält, nach der Abfrage jeder Teilnehmerschaltung innerhalb der Gruppe von n-Teilnehmerschaltungen über einen entsprechenden Taktimpuls weitergeschaltet. Das Ergebnis der Abfrage einer Teilnehmerschaltung wird also um die Zykluszeit verzögert ausgegeben und über die Schnittstelle S, die die jeweilige Information in gleicher Weise wie andere ihr zugeleitete Informationen in entsprechende Logikpotentiale 0 und 1 umwandelt, der zentralen Steuereinrichtung mitgeteilt. Das jeweilige Ausgangssignal des Schieberegisters wird weiterhin über einen invertierenden Trennverstärker T1 und bezogen auf das Schieberegister SR1 über jeweils einen der Widerstände R26 bis R28 dem Abgriff einer der Stellwiderstände R22, R20 bzw. R18 zugeführt. In der praktischen Schaltungsausführung sind diese Widerstände jeweils in zwei separate Teilwiderstände unterteilt, wobei dann ihr Verbindungspunkt dem dargestellten Abgriff entspricht. Unter der Annahme, daß der aus den Widerständen R19 und R20 bestehende Teiler über die entsprechende Stellung des Selektors M4 den Ansprechschwellwert für die Durchschaltung des Differenzverstärkers K1 bestimmt, wird nun für den Fall, daß als Ausgangssignal des Differenzverstärkers bei der vorhergehenden Abfrage derselben Teilnehmerschaltung im Zyklus ein dem Logikpotential 1 entsprechendes Ausgangssignal vorhanden war, dieses Ausgangssignal z. B. als ein positives Potential am Ausgang des Trennverstärkers T2 erscheinen. Dadurch wird über den am Teilerpunkt der Widerstände R19 und R20 angeschaltete Widerstand R24 das Eingangspotential für den Selektor M4 etwas in positiver Richtung verschoben. Diese Verschiebung greift dann über den Ausgang in gleicher Weise zum invertierenden Eingang des Differenzverstärkers K1 durch. Damit wird die über den Schaltungspunkt Sb von der b-Ader abgeleitete Spannungswert etwas in diejenige Richtung verschoben, die ursprünglich zum Ansprechen führt. Es wird somit hinsichtlich des Ansprechwertes ein sogenannter Hysteresebereich vorgegeben. Dadurch läßt sich eine eindeutige Aussage erreichen. Erst wenn der Leitungswiderstand wieder soweit ansteigt, daß die an den Eingängen als Differenzspannung auftretende Spannung um die genannte Spannungsverschiebung ansteigt, wird sich das Ausgangssignal von K1 in das dem Logikpotential 1 zugeordnete Ausgangspotential ändern. Damit wird dann beispielsweise der Ruhezustand definiert. Das Schieberegister, über das der bei der vorangehenden Abfrage ermittelte Zustand für die genannten Steuerungszwecke herangezogen wird, ist ohnehin zur Anpassung an die den Betrieb des Systems zugrundeliegenden Zeitverhältnisse notwendig. Diese Anpassung erfolgt beispielsweise dadurch, daß ausschließlich die einem eingeschwungenen Zustand der beteiligten Bauelemente bzw. Baueinheiten entsprechende Information ausgewertet wird.

Es wurde bereits ausgeführt, daß über den Indikator K1 sowohl der Schleifenschlußzustand als auch der Schleifenschluß im Rufzustand, der dann die Rufabschaltung veranlaßt, erkannt wird. Zur Erkennung des Erdtastendruckes dient der den Indikator K2 und das nachgeschaltete Schieberegister SR2 enthaltene Auswertezweig, der zusätzlich an die Ausgangsleitung des den jeweiligen Schaltungspunkt Sm abfragenden Selektors M2 angekoppelt ist. Mit der Betätigung der Taste ET werden an der Teilnehmerstelle Tln die beiden Adern der Teilnehmeranschlußleitung geerdet. Für den als Komparator eingesetzten Differenzverstärker K2 ist in gleicher Weise wie für den Differenzverstärker K1 eine Ansprechschwelle vorgegeben. Sie wird durch die über den Widerstand R31 vom Verbindungspunkt der eine Teilerschaltung bildenden Widerstände R29 und R30 abgenommen. Zur Erzeugung einer dynamischen Hysterese wird ebenfalls über den hier nicht invertierenden Trennverstärker T2 zum erforderlichen Zeitpunkt die Ausgangsspannung an einem der Teilwiderstände, nämlich dem Teilwiderstand R30, zurückgeführt. Die Wirkungsweise ist dabei die gleiche wie sie für den Komparator K1 und das ihm nachgeschaltete Schieberegister SR1 bereits geschildert wurde. In Übereinstimmung mit dem Schieberegister SR1 erhält auch das Schieberegister SR2 nach der Abfrage einer jeden Teilnehmeranschlußschaltung innerhalb der aus einer bestimmten Anzahl n gebildeten Gruppe von Teilnehmeranschlußleitungen einen Schiebetaktimpuls.

Der aus den Widerständen R29 und R30 bestehende Spannungsteiler ist so dimensioniert, daß die am Verbindungspunkt der beiden Widerstände entstehende negative Vorspannung einen betragsmäßig etwas geringeren Spannungswert hat als die am Schaltungspunkt Sm bei geschlossener Schleife entstehende negative Spannung. Mit der Betätigung der Erdtaste wechselt das Potential der a-Ader von Minus- nach Pluspotential, so daß der Schaltungspunkt Sm dann ebenfalls positives Potential aufweist. Dadurch wird bei einer Abfrage des betreffenden Schaltungspunktes über den Selektor M2 die Schwelle für den Differenzverstärker K2 überwunden. Es wird somit der Erdtastendruck durch das ausgangsseitig in einem solchen Fall entstehende Logikpotential, beispielsweise das Logikpotential 1, gekennzeichnet. Mit der nächsten Abfrage ein und desselben Spannungspunktes, die beispielsweise nach einer Zykluszeit von 4 msek erneut vorgenommen wird, wird diese Aussage unter der Voraussetzung, daß die Öffnungskriterien für das Gatter G vorliegen, über die Schnittstelle S der zentralen Steuereinrichtung ZST übermittelt. Diese Einrichtung löst dann die damit zusammenhängenden Steuervorgänge, beispielsweise die Rückfrage aus bzw. sie erkennt den betreffenden Teilnehmer als bevorrechtigte Nebenstelle und leitet dann die notwendigen Prozeduren ein. Die Durchlassbedingung für das Gatter G ist dann erfüllt, wenn neben dem entsprechenden Ausgangssignal des Schieberegisters SR2 an einem der weiteren Eingänge ein den niederohmigen Speisezustand der jeweiligen Teilnehmeranschlußleitung kennzeichnendes Signal anliegt. Über einen weiteren Eingang muß ein den Schleifenschluß der jeweiligen Teilnehmerleitung signalisierendes Ausgangssignal des Schieberegisters SR1 anliegen.

Es muß für jede Auswertung sichergestellt sein, das Wechselspannungsanteile, die eingekoppelten Störanteile oder auch überlagerte Nutzsignale, beispielsweise die überlagerte Rufspannung sein können, den Auswertevorgang nicht derart beeinflussen, daß dadurch eine die tatsächlichen Verhältnisse verfälschende Aussage entsteht. Besonders kritisch ist dies im Rufzustand und im hochohmigen Speisezustand der jeweiligen Teilnehmeranschlußleitung. Für diese genannten Betriebszustände werden die jeweiligen Meßwerte symmetrisch den Ankoppelungspunkten entnommen und auf den Eingang des Differenzverstärkers K1 geführt. Da eingekoppelte Längsspannungen bei einer guten Erdsymmetrie der Speiseschaltung auf den beiden Adern gleichartig auftreten, können sie sich kaum an den Eingängen des Differenzverstärkers K1 auswirken. Eine derartige gute Erdsymmetrie kann man im Falle der niederohmigen Speisung voraussetzen. Deshalb sind in diesem Fall keine weiteren Maßnahmen für die Siebung vorgesehen. Der Auswertekreis kann so dimensioniert werden, daß für diesen Fall bei den zu erwartenden größten Längsspannungswerten der Gleichtaktbereich des Differenzverstärkers nicht unterschritten wird. Im Falle der hochohmig ausgebildeten Speiseschaltung, d. h. also in den Fällen, in denen in jeder Ader noch zusätzlich der Widerstand R3 bzw. R4 wirksam eingefügt ist, kann diese Voraussetzung nicht gegeben sein. Es wird deshalb in diesem Falle und im Falle des Rufzustandes parallel zu den beiden Eingängen des diese Zustände als Indikator bewertenden Differenzverstärkers K1 ein Siebglied mit Tiefpasscharakteristik geschaltet. In der praktischen Ausführung ist dies individuell für jede Teilnehmerschaltung ein Kondensator, der mit den entsprechenden Widerstand n R13 und R16 die Siebschaltung darstellt. Die wirksame Anschaltung des jeweiligen Kondensators C1 bis Cn erfolgt über einen weiteren Selektor M3, der in gleicher Weise wie die Selektoren M1 und M2 durch eine fortlaufende Adressierung in die nächste Schaltstellung gebracht wird. Das bedeutet, daß der individuell für jede Teilnehmerschaltung bei den genannten Betriebsarten vorhandene Kondensator jeweils nach jeder Zykluszeit erneut wirksam ist. Unter der Voraussetzung, daß die Frequenz der auszusiebenden Wechselspannungsanteile kleiner als die Abtastfrequenz ist kann gegenüber dem Fall, daß ein Kondensator kontinuierlich angeschaltet ist, der Kapazitätswert eines jeden Kondensators mindestens um den Faktor n verringert werden. Dadurch kann eine ausreichende Siebwirkung mit jeweils einem Kondensator kleinster Abmessungen erreicht werden. Für den Fall, daß der jeweilige Kondensator nur einen Bruchteil derjenigen Zeitspanne, die für jede Abfrage einer Teilnehmeranschlußleitung zur Verfügung steht, wirksam angeschaltet ist kann der Kapazitätswert eines jeden Kondensators noch weiter verringert werden. Es besteht dadurch die Möglichkeit, den Kondensator bei Wahl der entsprechenden Technologie als Teil der integrierten Schaltung unmittelbar in diese einzubeziehen.

Die Filterwirkung, die durch R13, R16 und C1 bis Cn erreicht wird, kann auf einfache Art so groß gemacht werden, daß bei Einsparung des Kontaktes 1p und Kurzschluß von R3 in dem dabei gebildeten unsymmetrischen hochohmigen Speisezustand Längsspannungen so stark ausgefiltert werden, daß keine Fehlanzeigen durch den Komparator K1 erfolgen.

Bei der unmittelbar zeitlich nacheinander in einem bestimmten Zyklus erfolgenden Wirksamschaltung ergibt sich trotz des niederen Kapazitätswertes eine virtuelle Zeitkonstante, die im Hinblick auf die sich einstellende Siebung derjenigen Siebwirkung entspricht, die sich bei dauernder Wirksamschaltung für einen Kondensator mit n-facher größeren Kapazitätswert ergibt. Diese Lösung ist insofern äußerst vorteilhaft, da wegen der feststehenden Eigenschaften des verwendeten integrierten Differenzverstärkers der Widerstandswert für den im Siebglied enthaltenen ohmischen Widerstand nicht entsprechend größer gewählt werden könnte.

Die über den Selektor M3 jeweils wirksam geschalteten Kondensatoren C1 bis Cn werden nun zusätzlich für die Siebung derjenigen Eingangsgrößen benutzt, die dem Differenzverstärker K2 zugeführt werden. Dieser Differenzverstärker dient, wie bereits erläutert, als Indikator für die Erkennung der Erdtastenbetätigung. Es sind bei der Abfrage neben dem Nutzsignal wegen des in unsymmetrischer Weise erfolgen Abgriffes Störspannungen, die sich aus den an der Leitungsader auftretenden Längsspannungen ergeben, vorhanden. Die einzelnen Kondensatoren sind über den Selektor M3 nur in einem dem Rufzustand bzw. dem hochohmigen Speisezustand entsprechenden Betriebszustand der Teilnehmeranschlußleitung für die Eingänge des Differenzverstärkers K1 wirksam. Im niederohmigen Zustand der Speiseschaltung erfolgt unmittelbar über den Umschalter Sc die Anschaltung des für die jeweilige Teilnehmerschaltung maßgebenden Kondensator C an die Eingänge des Differenzverstärkers K2. Der diese Anschaltung vornehmende Umschalter Sc wird von der zentralen Steuereinrichtung über die Schnittstelle entsprechend gesteuert. Für die jeweils wirksame Anschaltung eines Kondensators ist keine zusätzliche Ansteuerlogik erforderlich, da diese Anschaltung über den in gleicher Weise wie die beiden anderen Selektoren gesteuerten Selektor M3 erfolgt. Der Zustand der Speiseschaltung ist infolge der erforderlichen Steuerung des Schaltelementes P jeweils im der zentralen Steuereinrichtung abgespeichert. Es können bei gleichem Aufwand durch die mehrfache Ausnutzung der Kondensatoren also wahlweise drei verschiedene Indikationen gefiltert werden. Neben der Unempfindlichkeit für die Einspeisung der Rufspannung besteht gleichzeitig für die Erdtastenbetätigung erkennende Indikationsschaltung und im hochohmigen Schaltzustand der Speisebrücke, die durch Kurzschluß von R3 auch unsymmetrisch ausgebildet sein kann, eine Unempfindlichkeit gegenüber Längsspannungen.

**Ansprüche**

1. Schaltungsanordnung zur Feststellung des Schaltzustandes einer Teilnehmeranschlußleitung in Fernmeldeanlagen, deren Leitungsadern (a, b) über jeweils einen Speisewiderstand (R1, R2) an einen der beiden Pole der Speisespannungsquelle (UB) angeschlossen sind, vorzugsweise in durch eine zentrale Steuereinrichtung (ZST) gesteuerten Fernsprechvermittlungsanlagen, insbesondere Fernsprechnebenstellenanlagen, durch Bewertung des Potentialzustandes an leitungsadernbezogenen festen Ankopplungspunkten (Sb, Sm) in der dem amtsseitigen Abschluß der jeweiligen Teilnehmeranschlußleitung bildenden Teilnehmeranschlußschaltung (TS), wobei bezogen auf die möglichen Schaltzustände der Teilnehmeranschlußleitung abhängig vom Betriebszustand derselben unterschiedliche Indikationen durchführbar sind und wobei diese Indikationen unter Verwendung einer zyklisch weitergeschalteten Auswahlschaltung (M1, M2) nacheinander bei einer Vielzahl von Teilnehmeranschlußleitungen durchgeführt werden, dadurch gekennzeichnet, daß die insgesamt zu bewertenden Indikationsfälle jeweils in zwei sich bei ordnungsgemäßem Funktionsablauf einander bedingenden Bewertungsgruppen unterteilt sind und für jede Gruppe die ihr zugeordneten Indikationsfälle durch das Ausgangssignal eines jeder Bewertungsgruppe ausschließlich zugeordneten Komparators (K1 bzw. K2) registrierbar sind, daß dabei durch ein Auswahlschaltglied (M1, M2) der elektronischen Auswahlschaltung mindestens einer der Eingänge eines jeden Komparators an die Ankoppelpunkte (Sb, Sm) unter Einschaltung an die unmittelbare Ansteuerung der Auswahlschaltglieder gleichspannungsmäßig ermöglichenden Teilerschaltung (R7, R8 in Verbindung mit R12, R13 bzw. R9, R10, in Verbindung mit R14, R15) anschaltbar sind, daß abhängig vom durch die zentrale Steuereinrichtung (ZST) einzustellenden Betriebszustand einer jeden Teilnehmeranschlußschaltung (niederohmige bzw. hochohmige Gleichstromspeisung, Rufzustand) für den der vorgeordneten Bewertungsgruppe zugehörigen Komparator (K1) jeweils ein seinen Schaltzustand zusätzlich beeinflussenden unterschiedlicher Bezugswert vorgebbar ist, daß eingangsseitig für die Komparatoren in jeder Schaltstellung des Auswahlschaltgliedes ein gesonderter, jeweils Siebzwecken dienender Kondensator (C1 bis Cn) anschaltbar ist, daß die wirksame Signalisierung der der anderen Bewertungsgruppe zugeordneten Indikationsfälle (Erdtastenbetätigungsindikation) durch das gleichzeitige Auftreten eines Ausgangssignals des der erstgenannten Bewertungsgruppe fest zugeordneten Komparators (K1) in Abhängigkeit von einem dem notwendiger Weise zuzuordnenden Betriebszustand (niederohmige Speiseschaltung) der Teilnehmeranschlußleitung charakterisierenden Signal bestimmt ist.

2. Schaltungsanordnung nach Anspruch 1, dadurch gekennzeichnet, daß mit Bezug auf die erstgenannte Bewertungsgruppe (Schleifenindikation bei hochohmiger bzw. niederohmiger Speiseschaltung, Rufzustand) die beiden Eingänge des zugeordneten Komparators (K1) an jeweils einen der leitungsadernbezogenen Ankoppelpunkte (Sb, Sm) und mit Bezug auf die andere Bewertungsgruppe (Erdtastenbetätigungsindikation) lediglich ein Eingang des zugeordneten Komparators (K2) an einen der Ankoppelpunkte (Sm) angeschaltet ist und der andere Eingang mit einem Gleichspannungsbezugswert beaufschlagt wird.

3. Schaltungsanordnung nach Anspruch 1 und 2, dadurch gekennzeichnet, dass als leitungsaderbezogene Ankopplungspunkte in jeder Teilnehmeranschlußschaltung einmal die der Speisespannungsquelle (-UB) abgewendeten Anschlüsse eines in jeder Ader eingefügten Speisewiderstandes (R1, R2 bzw. R1 und R3 und R2 und R4) und zum anderen der Verbindungspunkt zweier zwischen diesen Anschlüssen einen hochohmigen Querzweig bildenden Widerstände gleichen Widerstandswertes dient.

4. Schaltungsanordnung nach Anspruch 3, dadurch gekennzeichnet, dass die Widerstandswerte dieser den Querzweig bildenden Widerstände (R5, R6) so gewählt sind, dass die in dem genannten hochohmigen Speisezustand der Speiseschaltung dem als anderer Ankopplungspunkt für die symmetrische Auswertung dienenden Anschlusspunkt des Speisewiderstandes eine benso grosse Potentialverschiebung bewirken wie eine geschlossene Teilnehmerleitungsschleife im niederohmigen Speisezustand, wobei jedoch demgegenüber bei geschlossener Leitungsschleife im hochohmigen Speisezustand der Speiseschaltung eine geringere Potentialveränderung bewirkt wird.

## Claims

1. A circuit arrangement for determining the switching state of a subscriber connection line in telecommunications systems, whose line wires (a, b) are respectively connected via a feed resistor (R1, R2) to one of the two poles of the feed voltage source (UB), preferably in telephone exchange systems controlled by a central control device (ZST) in particular PBX systems, the potential state at line-wire related fixed coupling points (Sb, Sm) in the subscriber connection circuit (TS) which forms the termination at the exchange end of the particular subscriber connection line being evaluated where in relation to the possible switching states of the subscriber connection line, in dependence upon the operating state thereof, different indications can be carried out, and where the indications are consecutively carried out in a plurality of subscriber connection lines employing a cyclically advanced selection circuit (M1, M2), characterised in that the indication cases which are to be evaluated in all, are respectively divided into two evaluation groups which are dependent upon one another during proper function flow and for each group, the indication cases assigned thereto can be registered by the output signal of a comparator (K1 or K2) which is exclusively assigned to each evaluation group, that as a result, by means of a selection switching element (M1, M2) of the electronic selection circuit, at least one of the inputs of each comparator can be connected to the coupling points (Sb, Sm) by connecting to the divider circuit (R7, R8 in association with R12, R13 or R9, R10 in association with R14, R15) which enables direct control of the selection switching element in terms of direct voltage, that in dependence upon the operating stage of each subscriber connection line (low resistance or high resistance direct current supply, ringing state) which is to be adjusted by the central control device (ZST) a variable reference value, which additionally influences the switching state of the comparator, is determinable for the comparator (K1) assigned to the pre-arranged evaluation group, that in each switching state of the selection switching element a separate capacitor (CI to Cn) for filter purposes can be connected at the input end for the comparators, that the effective signalling of the indication cases (earth key actuation indication) assigned to the other evaluation group as and when necessary is determined by the simultaneous occurrence of an output signal of the comparator (K1) which is firmly assigned to the first-mentioned evaluation group, in dependence upon a signal which characterises the operating state (low resistance feed circuit) of the subscriber connection line which is to be assigned.

2. A circuit arrangement as claimed in Claim 1, characterised in that with reference to the first-mentioned evaluation group (loop indication in a high resistance or low resistance feed circuit, ringing state) the two inputs of the assigned comparator (K1) are each connected to one of the line-wire related coupling points (Sb, Sm) and with reference to the other evaluation group (earth key actuation indication) only one input of the assigned comparator (K2) is connected to one of the coupling points (Sm) and the other input is fed with a direct voltage reference value.

3. A circuit arrangement as claimed in Claim 1 and 2, characterised in that in each subscriber connection line, on the one hand the terminal remote from the feed voltage source (-UB) of a feed resistor (R1, R2 or as the case may be R1 and R3 and R2 and R4) which is inserted into each wire, and on the other hand the junction between two resistors of the same resistance value which form a high resistance shunt between the terminals, serve as line-wire related coupling points.

4. A circuit arrangement as claimed in Claim 3, characterised in that the resistance values of the resistors (R5, R6) which form the shunt are so selected that those in said high resistance feed state of the feed circuit at the connection point of the feed resistor which serves as other coupling point for the symmetrical evaluation effect a potential shift which equals that of a closed subscriber connection loop in the low resistance feed state, where however on the other hand when the line loop is closed in the high resistance feed state of the feed circuit, a negligible potential change is effected.

**Revendications**

1. Circuit pour déterminer l'état de commutation d'une ligne de raccordement d'abonné dans des installations de télécommunications dont les conducteurs de ligne (a, b) sont reliés, respectivement par l'intermédiaire d'une résistance d'alimentation (R1, R2) à un des deux pôles de la source de tension d'alimentation (UB), de préférence dans des centraux téléphoniques commandés par un dispositif de commande central (ZST), notamment dans des installations téléphoniques supplémentaires, par évaluation de l'état de potentiel au niveau de points de couplage fixes (Sb, Sm), rapporté aux conducteurs de ligne, dans le circuit de raccordement d'abonné (TS) formant la terminaison côté central de la ligne de raccordement d'abonné respective, grâce à quoi, rapporté aux états de commutation possibles de la ligne de raccordement d'abonné, différentes indications peuvent être exécutées en fonction de l'état de fonctionnement de celle-ci, et ces indications peuvent être exécutées successivement dans le cas d'un grand nombre de lignes de raccordement d'abonné, en utilisant un circuit de sélection (M1, M2) avancé cycliquement, caractérisé par le fait que les cas d'indication devant être évalués au total sont respectivement subdivisés en deux groupes d'évaluation se conditionnant l'un l'autre dans le cas d'un déroulement ordonné des fonctions et que pour chaque groupe les cas d'indication qui lui sont associés peuvent être enregistrés par le signal de sortie d'un comparateur (K1 ou K2) associé de façon exclusive à chaque groupe d'évaluation, que ce faisant, grâce à un élément de commutation de sélection (M1, M2) du circuit de sélection électronique, au moins une des entrées d'un comparateur respectif peut être reliée aux points de couplage (Sb, Sm) avec interposition d'un circuit diviseur (R7, R8 en liaison avec R12, R13 ou R9, R10 en liaison avec R14, R15) permettant la commande directe des éléments de commutation de sélection en tension continue, qu'en fonction de l'état de fonctionnement, devant être réglé par le dispositif de commande central (ZST), d'un circuit de raccordement d'abonné (alimentation en courant continu de faible résistance ohmique ou de forte résistance ohmique, état d'appel), une valeur de référence différente, agissant en supplément sur son état de commutation, peut être respectivement prédéterminée pour le comparateur (K1) associé au groupe d'évaluation situé devant, que côté entrée un condensateur distinct (CI à Cn), ayant respectivement des buts de filtrage, peut être mis en circuit pour les comparateurs dans chaque position de commutation de l'élément de commutation de sélection, que la signalisation efficace des cas d'indication associés à l'autre groupe d'évaluation (indication d'actionnement de la touche de terre) est déterminée par l'apparition simultanée d'un signal de sortie du comparateur (K1) associé de façon fixe au premier groupe d'évaluation cité, en fonction d'un signal caractérisant l'état de fonctionnement, devant nécessairement être associé (circuit d'alimentation de faible valeur ohmique), de la ligne de raccordement d'abonné.

2. Circuit suivant la revendication 1, caractérisé par le fait qu'en référence au dit premier groupe d'évaluation (indication de boucle dans l'état d'alimentation par l'intermédiaire d'une forte résistance ohmique ou d'une faible résistance ohmique, et dans l'état d'appel) les deux entrées du comparateur associé (K1) sont reliées respectivement à un des points de couplage (Sb, Sm), rapportés aux conducteurs de la ligne, et en référence à l'autre groupe d'évaluation (indication d'actionnement de la touche de terre), une seule entrée du comparateur associé (K2) est reliée à un des points de couplage (Sm), et l'autre entrée reçoit une valeur de référence de tension continue.

3. Circuit suivant la revendication 1 et 2, caractérisé par le fait que d'une part les bornes, opposées à la source de tension d'alimentation (-UB) d'une résistance d'alimentation (R1, R2 ou R1 et R3 et R2 et R4) insérée dans chaque conducteur, et d'autre part le point de couplage de deux résistances de même valeur ohmique qui constituent une branche transversale de forte valeur ohmique entre ces bornes, servent de points de couplage, rapportés aux conducteurs de la ligne.

4. Circuit suivant la revendication 3, caractérisé par le fait que les valeurs ohmiques de ces résistances (R5, R6) qui constituent la branche transversale sont choisies de manière qu'elles produisent au niveau du point de raccordement de la résistance d'alimentation, servant d'autre point de couplage pour l'évaluation symétrique, dans le dit état d'alimentation de forte valeur ohmique du circuit d'alimentation, un décalage de potentiel aussi important que celui produit par une boucle de ligne d'abonné fermée dans l'état d'alimentation de faible valeur ohmique, alors que par contre il apparaît une variation de potentiel plus faible dans le cas d'une boucle de ligne fermée dans l'état d'alimentation de forte valeur ohmique du circuit d'alimentation.